# FASCICULE DE BREVET EUROPEEN

(11) **EP 2 613 926 B1**
(45) Date de publication et mention de la délivrance du brevet: **22.11.2017**
(21) Numéro de dépôt: 11764699.2
(22) Date de dépôt: 07.09.2011
(51) Int. Cl.: B29C 70/22, B29C 70/24, B29C 70/88

(54) **PROCEDE DE REALISATION D'UNE PIECE ELECTRIQUEMENT CONDUCTRICE EN MATERIAU COMPOSITE ET PIECE OBTENUE**
VERFAHREN ZUR HERSTELLUNG EINES ELEKTRISCH LEITENDEN TEILS AUS EINEM VERBUNDSTOFF UND DARAUS RESULTIERENDES TEIL
METHOD FOR PRODUCING AN ELECTRICALLY CONDUCTIVE PART FROM A COMPOSITE MATERIAL AND RESULTING PART

(30) Priorité: 07.09.2010 FR 1057111
(43) Date de publication de la demande: 17.07.2013
(73) Titulaire: Airbus Group SAS, 75016 Paris (FR)
(72) Inventeur: CINQUIN, Jacques, F-91430 Igny (FR)
(74) Mandataire: Ipside
(86) Numéro de dépôt international: PCT/EP2011/065493
(87) Numéro de publication internationale: WO 2012/032091

(56) Documents cités:
- EP-A1- 0 561 064
- DE-A1- 10 005 202
- FR-A1- 2 847 113
- GB-A- 1 275 705
- GB-A- 1 303 593
- US-A- 3 998 173
- US-A1- 2010 021 682
- CAMPBELL F C ED - CAMPBELL FLAKE C: "Manufacturing processes for advanced composites", 1 janvier 2004 (2004-01-01), MANUFACTURING PROCESSES FOR ADVANCED COMPOSITES, ELSEVIER ADVANCED TECHNOLOGY, OXFORD, GB, XP002580602, ISBN: 978-1-85617-415-2 pages 304-356, figures 2,9,37 page 312 - page 314
- Anonymous: "Lockstitch", Wikipedia, the free encyclopedia, 2 mars 2011 (2011-03-02), XP002629775, Extrait de l'Internet: URL:http://en.wikipedia.org/wiki/Lockstitc h [extrait le 2011-03-23]

## Description

La présente invention appartient au domaine des matériaux composites comportant des fibres maintenues dans une matrice organique dure.

Plus particulièrement l'invention concerne un procédé de réalisation d'une pièce en matériau composite et présentant des propriétés contrôlées de conduction électrique sur ses surfaces et dans son épaisseur et concerne également une telle pièce en matériau composite.

Les matériaux composites formés de fibres longues maintenues dans une matrice organique rigide sont bien connus et largement mis en oeuvre dans la réalisation de pièces de structures, qu'il s'agisse de structures travaillantes fortement chargées ou de simples carénages plus faiblement chargés.

Les avantages de telles pièces en matériaux composites sont diverses mais, en fonction des performances intrinsèques des fibres, des résines utilisées et des techniques de mise en oeuvre appliquées, les pièces sont obtenues avec des bénéfices possibles sur la résistance, la masse, la complexité ou le coût en particulier par rapport à des pièces équivalentes qui seraient réalisées en matériaux métalliques.

On trouve le plus souvent des pièces qui sont réalisées en mettant en oeuvre des fibres de verre ou des fibres aramide ou des fibres de carbone ou une combinaison de ces fibres.

En dehors de pièces de dimensions et de résistances limitées, ou d'applications particulières comme celles mettant en oeuvre un tissage en trois dimensions dit 3D, les fibres sont généralement agencées en couches successives dans l'épaisseur des pièces à réaliser pour former des plis dont l'accumulation forme l'épaisseur locale de la pièce et donne à cette dernière sa résistance et sa rigidité lorsque les fibres sont maintenues dans la matrice dure. Il est ainsi connu de réaliser des préformes, destinées à former des pièces en matériau composite, dont les plis de fibres sèches ou préimprégnées sont cousus à un stade précédant le durcissement de la résine pour maintenir les différents plis dans une position relative stable et assurer un premier compactage des plis entre eux. Ainsi la publication « Manufacturing processes for advanced composites » de F. Campbell du 1er janvier 2004 décrit de maintenir les plis d'une préforme sèche, pour réaliser une pièce par un procédé de transfert de résine, en réalisant des coutures sur les plis superposés avec des fibres de verre, d'aramide ou de carbone de même nature que celles formant les plis.

Une particularité des pièces composites considérées est leurs faibles conductions électriques intrinsèques du fait de la mise en oeuvre de matrices à base de résines organiques isolantes et du fait des fibres qui sont elles même réalisées avec des matériaux entrant dans la catégorie des isolants électriques (fibres de verre ou fibres aramide) ou dans la catégorie des matériaux considérés comme faiblement conducteurs ou mauvais isolants électriques, typiquement les fibres de carbone dans le domaine d'application considéré.

Dans certaines applications, en particulier lorsque des courants doivent être transportés par la structure, il est nécessaire de déposer à la surface des structures en matériaux composites des éléments conducteurs électriques.

Ainsi dans le cas des structures d'aéronef qui sont susceptibles d'être soumises à des impacts de foudre, un grillage métallique, le plus souvent en bronze ou en cuivre, est fixé sur une face des pièces en matériau composite, grillage dont la densité surfacique est adaptée aux courants devant être supportés pour disperser les courants induits par les impacts de foudre.

En l'absence d'une telle métallisation la structure en matériau composite, incapable de disperser l'énergie apportée par un impact de foudre, risque d'être endommagée localement par la foudre et de nécessiter dans ce cas des réparations urgentes.

En outre, contrairement aux structures métalliques, ces structures composites sont dans l'incapacité d'assurer la fonction de retour de courant d'un système électrique et il est nécessaire, par exemple dans le cas des aéronefs à structures en matériaux composites, de prévoir des conducteurs électriques pour assurer les retours de courant des systèmes électriques ou d'utiliser des éléments de structure métalliques et présentant une continuité électrique adaptée avec une fiabilité suffisante pour assurer le retour de courant des systèmes électriques.

Une telle solution, contraignante en elle-même sur le plan de la conception par le respect des cheminements électriques requis et de la continuité électrique nécessaire et par les contraintes de protection des structures métalliques par rapport aux structure composite lorsque celles-ci utilisent des fibres de carbone en particulier, s'ajoute à la nécessité de métalliser la structure pour la protéger des effets de la foudre et s'avère limiter le bénéfice attendu de l'utilisation généralisées des structures en matériau composite en particulier pour les aéronefs.

Les diverse solutions connues n'apporte pas réponse satisfaisante à ces problèmes de conduction électrique des pièces en matériau composite.

La présente invention propose un procédé de réalisation de pièces en matériau composite qui apporte une solution pour réaliser la pièce en assurant une amélioration des propriétés de conduction électriques de celle-ci sur l'une de ses faces ou sur les deux faces et/ou dans l'épaisseur.

La pièce fabriquée suivant le procédé de l'invention est une pièce en matériau composite comportant des fibres isolantes ou faiblement conductrices, dans le cas considéré des fibres de résistivité électrique égale ou supérieure à 1,5 10^-6 Ω.m, réparties suivant des plis empilés dans une épaisseur E de la pièce et maintenues, dans la pièce fabriquée, dans une matrice en résine organique dure.

Suivant le procédé un sur-piquage conducteur comportant des fils supérieurs et des fils inférieurs, un fil supérieur croisant un fil inférieur au niveau d'une piqûre conformément aux sur-piquages connus, est réalisé sur une préforme, constituée de tout ou partie des plis placés les uns par rapport aux autres dans l'ordre et suivant les orientations que les plis doivent avoir dans la pièce fabriquée, le sur-piquage conducteur étant réalisé lors d'une étape du procédé pendant laquelle la résine de la matrice n'est pas dure ou bien que les fibres des plis ne sont pas encore imprégnées et en utilisant pour au moins un des fils supérieurs ou inférieurs du sur-piquage conducteur un fil électriquement conducteur, c'est à dire un fil dans un matériau reconnu comme bon conducteur de l'électricité réalisé dans un matériau de résistivité électrique inférieure à 10^-7 Ω.m.

Avantageusement le sur-piquage conducteur est réalisé suivant des lignes de couture sensiblement parallèles suivant une première direction principale et suivant des lignes de couture sensiblement parallèles suivant au moins une seconde direction différente de la direction principale de sorte que les fils conducteurs du sur-piquage conducteur se croisent sur la face considéré de la préforme correspondant à ces fils conducteurs.

Les fils conducteurs forment ainsi naturellement sur au moins une des faces de la préforme un ensemble d'éléments pouvant être agencés de manières variées suivant des motifs considéré comme optimaux pour constituer sur au moins une face de la préforme un réseau de fils conducteurs en contact au niveau de leurs intersection pour favoriser la continuité électrique entre les fils du réseau. La mise en place des fils conducteurs est en outre réalisée à un stade de la fabrication de la pièce où il est aisé de déposer des fils conducteurs par des moyens conventionnels de piquage, les fils conducteurs restant à la surface de la pièce lorsque la résine est introduite et/ou durcie dans une étape ultérieure de la fabrication de la pièce.

Ainsi lorsque les fils sont en matériau électriquement conducteur, la face considérée de la pièce fabriquée est sensiblement équipotentielle au même titre qu'avec une métallisation conventionnelle par grillage de bronze par exemple.

Dans un mode de mise en oeuvre, les paramètres du sur-piquage conducteur sont ajustés afin qu'au niveau de chaque piqûre du sur-piquage traversant la préforme, le fil supérieur et le fil inférieur sont croisés dans une partie médiane d'une épaisseur de la préforme, ce qui permet de contrôler les caractéristiques de la conduction dans l'épaisseur de la préforme et donc de la pièce fabriquée.

Dans un autre mode de mise en oeuvre, les paramètres du sur-piquage conducteur sont ajustés afin qu'au niveau de chaque piqûre du sur-piquage traversant la préforme, le fil supérieur et le fil inférieur sont croisés au niveau d'une face inférieure de la préforme du côté de laquelle face inférieure se trouve le fil inférieur ce qui permet de garantir qu'un des fils traverse la préforme de part en part et que l'autre fil reste totalement en surface sur une face de la préforme.

Lorsque le sur-piquage conducteur est réalisé en utilisant des fils supérieurs conducteurs et des fils inférieurs conducteurs, les deux faces de la préforme ainsi que l'épaisseur, et donc de la pièce fabriquées si la préforme concerne tous les plis de la pièce, sont en continuité électrique par les fils conducteurs, par exemple pour former une métallisation de la pièce.

Lorsque le sur-piquage conducteur est réalisé en utilisant des fils supérieurs conducteurs et des fils inférieurs non conducteurs de résistivité supérieure à 10^10 Ω.m ou en utilisant des fils supérieurs non conducteurs de résistivité supérieure à 10^10 Ω.m et des fils inférieurs conducteurs, une seule face est rendu électriquement conductrice, par exemple pour former une métallisation.

Pour réaliser des sur-piquages conducteurs de qualité avec des machines conventionnelles nécessitant des fils à la fois souples et bon conducteurs, les fils conducteurs sont constitués d'un assemblage de brins métalliques de préférences torsadés entre eux.

Avantageusement, dans le cas d'une métallisation, suivant les fonctions devant être réalisées par la métallisation et suivant les caractéristiques des fils conducteurs utilisés, les distances **D** entre des lignes de couture voisines sensiblement parallèles sont déterminées pour obtenir une densité surfacique de métallisation de la préforme comprise entre 30 et 500g/m2.

En outre, suivant les caractéristiques des fils conducteurs utilisés, les longueurs **P** entre les piqûres successives d'une ligne de couture sont déterminées pour obtenir, au moins localement, une section conductrice des fils de sur-piquage conducteur traversant la préforme suivant son épaisseur comprise entre 1000 et 50000 mm2 par m2 de surface de la pièce.

Il est ainsi possible de choisir lors de la conception de la pièce des caractéristiques de conduction électriques à travers l'épaisseur de la pièce.

Le sur-piquage conducteur peut être réalisé sur une préforme sèche qui peut par ailleurs être poudrée ou non de grains d'une résine thermofusible ou encore être réalisé sur une préforme dont les fibres des plis sont pré-imprégnées d'une résine non durcie, et de manière générale dans les situations dans lesquelles les préformes peuvent être facilement traversées par les aiguilles de couture utilisées pour réaliser le sur-piquage conducteur. L'invention concerne également une pièce telle qu'une pièce pouvant être réalisée par le procédé de l'invention.

Une telle pièce en matériau composite comporte des fibres isolantes ou faiblement conductrices de résistivité électrique égale ou supérieure à 1,5 10^-6 Ω.m, maintenues dans une matrice organique dure, dans laquelle les fibres sont agencées en plis superposés suivant une épaisseur de la pièce entre une face supérieure et une face inférieure de la pièce.

En outre des fils supérieurs du côté de la face supérieure et des fils inférieurs du côté de la face inférieure, agencés en lignes de couture suivant au moins deux directions sécantes, traversent tout ou partie des plis au niveau de piqûres et les fils supérieurs et ou les fils inférieurs sont électriquement conducteurs réalisés dans un matériau de résistivité électrique inférieure à 10^-7 Ω.m de sorte qu'ils déterminent à la surface de la pièce sur au moins une face correspondante, supérieure, respectivement inférieure, un réseau de fils électriquement conducteurs et en contact au niveau des intersections de fils, conférant à la pièce des caractéristiques de conduction électrique, par exemple une métallisation de la pièce sur une de ses faces ou sur ses deux faces.

Avantageusement, lorsqu'une seule face de la pièce doit être rendue conductrice, seuls les fils supérieurs ou seuls les fils inférieurs sont conducteurs, et les fils conducteurs ne traversent pas toute l'épaisseur de la pièce au niveau des piqûres.

Pour obtenir des bonnes propriétés de conduction, les fils conducteurs agencés en lignes de couture sont des fils métalliques, en particulier à base de cuivre, d'aluminium ou d'un acier, formés par un assemblage de plusieurs brins qui assurent la souplesse de ces fils lors de leur mise en place et limite les risques de ruptures de fils sous l'effet des vibrations et des déformations de la pièce sous charges.

Pour obtenir ces qualités, de préférence les fils conducteurs ont des sections conductrices comprises entre 0.005mm2 et 0.50mm2 et comportent entre 1 et 50 brins.

En fonction des caractéristiques des fils électriquement conducteurs mis en oeuvre, les distances **D** entre lignes de couture voisines déterminent sur la face considérée de la pièce une métallisation comprise entre 30 et 500 g/m2 en fonction des exigences de métallisation.

Également en fonctions des caractéristiques des fils conducteurs mis en oeuvre et des performances de conduction recherchées entre les faces opposées de la pièce, la densité de piqûres à la surface de la pièce est comprise localement entre 2500 et 250000 piqûres par m2.

En outre sur la pièce réalisée, la densité surfacique de fils de sur-piquage conducteurs et ou la densité de piqûres sont variables suivant des emplacements à la surface de la pièce de sorte que les performances de conduction, par exemple les performances électriques de la métallisation obtenue avec des fils de sur-piquage électriquement conducteur, peuvent être adaptées avec un impact minimal sur la masse de la pièce.

Pour assurer un contact électrique de qualité entre des pièces assemblées, sur la pièce de l'invention, la densité surfacique de fils conducteurs et ou la densité de piqûres sont augmentées dans les zones correspondant à des surfaces d'assemblage entre la pièce et une ou plusieurs autres pièces conductrices telles que des pièces métalliques ou des pièces en matériau composite ayant des propriétés conductrices améliorées.

Dans une application avantageuse de l'invention, une telle pièce est destinée à une structure d'aéronef et comporte sur au moins une de ses faces une métallisation réalisée au moyen d'un fil de sur-piquage électriquement conducteur destinée à assurer le retour de courant d'équipements électriques ou électroniques de l'aéronef et ou comporte sur au moins une de ses faces une métallisation destinée à protéger la pièce en matériau composite contre les effets d'un impact de foudre.

La description d'un mode de mise en oeuvre du procédé et des pièces en matériaux composites de l'invention est faite en référence aux figures qui représentent :

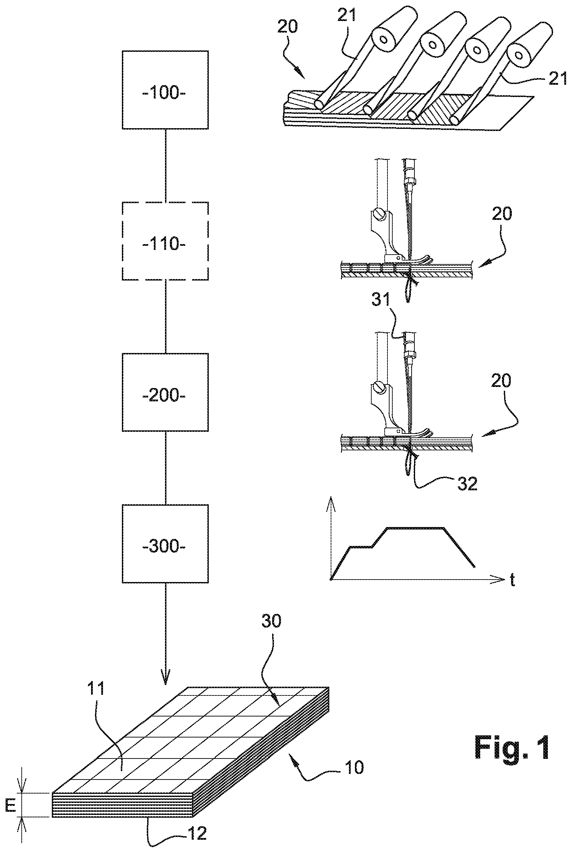

- Figure 1 :: un schéma des étapes principales du procédé de l'invention ;
- Figures 2a et 2b :: des sections de pièces en matériau composite au niveau d'une ligne de couture pour deux exemples de piqûres ;
- figure 3 :: une vue schématique en perspective d'une pièce de l'invention telle qu'elle peut être obtenue par le procédé ;
- figure 4 :: une illustration schématique d'un assemblage d'une pièce de l'invention avec une autre pièce.

La présente invention s'applique aux pièces en matériaux composites comportant des fibres longues minérales ou organiques, isolantes ou faiblement conductrices, telles que des fibres de verre, des fibres aramide, des fibres de carbone..., maintenues dans une matrice organique rigide.

Dans le cadre de la présente description, les expressions "isolante ou faiblement conducteur" et "conducteur" doivent être comprises de manière générale comme signifiant "électriquement isolante ou faiblement conducteur" et "électriquement conducteur" sauf s'il en est précisé autrement ou s'il est évident dans un contexte particulier pour un homme du métier qu'il en est autrement.

Les expressions "isolante ou faiblement conducteur" et "conducteur" doivent également être comprises sur le plan électrique dans un sens qui leur est donné dans l'industrie électromécanique, c'est à dire pour les matériaux électriquement isolants des matériaux pouvant être utilisés comme isolant tels que le verre ou la plupart des matériaux polymères, pour les matériaux faiblement conducteurs des matériaux considérés de manière générale comme insuffisamment conducteur de l'électricité pour être utilisés pour transporter l'énergie électrique et trop conducteur pour être utilisés comme isolant, telles que les fibres de carbone, et enfin pour les matériaux électriquement conducteurs les matériaux généralement reconnus comme pouvant servir dans le cadre du transport de l'énergie électrique, c'est à dire la plupart des métaux et alliages métalliques courrants.

A titre d'illustration, les fibres de carbone, considérées comme faiblement conductrices, ont des résistivités électriques généralement comprises entre 1,5 10^-6 Ω.m et 1,5 10^-5 Ω.m, valeurs qui sont à comparer à celles des matériaux conducteurs métalliques ordinaires de l'orde de 10^-8 à 10^-7 Ω.m ou à celle des matériaux isolants ordinaires dont la résistivité est supérieure à 10^10 Ω.m et dépasse souvent 10^15 Ω.m.

D'une manière générale l'invention a pour objet d'améliorer les caractéristiques de conduction électrique de pièces réalisées en matériau composite, dont les performances sont limitées sur les plans électriques, et lorsque le terme "conducteur" est utilisé comme caractéristique d'un fil de sur-piquage, il convient de comprendre que dans la présente invention le fil de sur-piquage a "des caractéristiques de conduction sensiblement supérieures à celles des fibres et de la matrice du matériau composite considéré"

Plus particulièrement l'invention s'applique aux pièces en matériaux composites qui au cours de leurs procédés de fabrication comportent une étape de mise en forme de plusieurs plis de fibres empilés et compactés ensemble dans des conditions dans lesquelles les plis ne sont pas encore immobilisés dans la matrice rigide.

Les fibres d'un pli peuvent être organisées en nappes, dans lesquelles les fibres ont toutes sensiblement la même orientation, ou en tissus, dans lesquels les fibres ont au moins deux orientations différentes et sont agencées pour former le tissu ou encore un mat dans lequel les fibres n'ont pas d'orientations privilégiées dans le plan du pli.

Dans cette étape de mise en forme, les plis sont par exemple imprégnés d'une résine à l'état pâteux avant une phase de durcissement de la résine par polymérisation ou sont par exemple manipulés sous la forme de tissus secs devant faire l'objet d'une imprégnation ultérieure par de la résine liquide (cas du procédé RTM : Resin Transfer Molding) qui est durcie après cette imprégnation.

Pour les besoins de la description détaillée d'un mode de mise en oeuvre du procédé de l'invention, il sera considéré de manière non limitative le cas d'une pièce réalisée par un procédé RTM dans lequel les fibres sont d'abord agencées entre elles sous la forme d'une préforme sèche puis placées dans un moule pour être imprégnées de résine par transfert.

Dans une première étape 100 du procédé de réalisation d'une pièce 10 suivant l'invention, une préforme 20, dans l'exemple considéré une préforme sèche, est réalisée par un empilement de plis 21 de fibres sèches suivant un procédé conventionnel de réalisation des préformes.

Dans les pièces réalisées suivant ce procédé, les plis 21 sont placés en couches sensiblements parallèles entre elles, également sensiblement parallèles à une face supérieure 11 ainsi qu'à une face inférieure 12 de la pièce 10, et l'accumulation des plis déterminent une épaisseur E de la pièce à réaliser.

En particulier le nombre de plis souhaité est déposé en fonction des emplacements sur la pièce 10 en tenant compte des orientations souhaitées pour les fibres de chaque pli, le nombre des plis et les orientations des fibres étant déterminées lors de la conception de la pièce.

Le cas échéant, lors d'une étape facultative 110 de préassemblage des plis, les différents plis 21 sont maintenus entre eux par un sur-piquage au moyen de fils conventionnels pour cet usage qui peuvent être de même nature que les fibres de la préforme ici encore suivant un procédé conventionnel dans le domaine de la réalisation des préformes sèches.

Le sur-piquage consiste à réaliser des piqûres, le plus souvent en lignes de coutures successives plus ou moins espacées, à l'aide de fils qui, au niveau de chaque piqûre, traversent l'ensemble des plis formant l'épaisseur de la préforme et qui maintiennent ainsi les différents plis entre eux.

Le plus souvent, lors de la réalisation d'une ligne de couture par piquage, la couture est réalisée suivant la technique des points de navette en utilisant deux fils.

Un premier fil, stocké sur une bobine principale, traverse le chas d'une aiguille qui va faire traverser à ce premier fil les plis devant être surpiqués, depuis une face de la préforme correspondant à la face supérieure de la pièce à réaliser, au niveau des piqures. Ce premier fil est dit fil supérieur.

Un second fil, stocké sur une bobine secondaire dite canette, assure le bloquage du fil supérieur au niveau de chaque piqure, en croisant le fil supérieur au niveau d'une boucle formée par ledit fil supérieur, du côté d'une face de la préforme opposée à la face traversée correspondant à la face inférieure de la pièce à réaliser. Ce second fil est dit fil inférieur.

Par extension les expressions "face supérieure de la préforme" et "face inférieure de la préforme" désigneront par la suite les faces de la préforme correspondant aux faces de la pièce 10 à réaliser, respectivement la face supérieure 11 et la face inférieure 12.

Le sur-piquage décrit précédemment, optionel vis à vis des besoins de la présente invention, est dit sur-piquage isolant car il n'apporte en lui-même aucune modification sensible des caractériqtiques de conduction de la pièce.

Ce sur-piquage isolant, qui a pour fonction essentiel de stabiliser la préforme et d'éviter le déplacement des plis entre eux lors des manipulations de la préforme avant la phase d'injection de la matrice ou pendant cette phase d'injection, pourra cependant comme il sera compris ultérieurement être limité, voire supprimé, au profit d'un sur-piquage décrit dans la suite du procédé.

Dans une seconde étape 200 du procédé, la préforme sèche 20 est surpiquée suivant des lignes de couture en utilisant des fils de sur-piquage supérieurs et ou des fils de sur-piquage inférieurs réalisés dans un matériau conducteur électrique comme signalé ci-dessus.

Ce sur-piquage, dans lequel les fils supérieurs ou les fils inférieurs ou les deux fils supérieurs et fils inférieurs sont en matériau conducteur, est dit sur-piquage conducteur 30.

Le principe des sur-piquages est connu et n'est pas décrit ici plus en détail. Il s'applique bien évidemment à l'éventuel sur-piquage isolant mais également au sur-piquage conducteur 30 qui s'en distingue essentiellement par la nature des fils de sur-piquage et qui peut impliquer des réglages particuliers compte tenu des caractéristiques (diamètre, nombre de brins dans le fil, résistance, résilience ...) des fils utilisés, mais qui mettent cependant en oeuvre les mêmes principes.

Les deux sur-piquages, isolant et conducteur, sont par ailleurs indépendants lorsqu'ils coexistent sur une même préforme, et pour les besoins de la réalisation de ces deux sur-piquages, les faces désignées supérieures et inférieures peuvent le cas échéant être inversées comme le comprendra l'homme du métier à la lecture de la description de l'invention.

Un tel matériau conducteur est par exemple du cuivre ou un alliage à base de cuivre en raison de ses propriétés de conduction électrique d'une part mais également de ses propriétés mécaniques, en particulier sa malléabilité qui donne au fil de cuivre une souplesse recherchée, et de ses propriétés électrochimiques, qui rendent compatible son utilisation avec des matériaux composite incorporant des fibres de carbone, d'autre part.

Cependant les fils pour le sur-piquage conducteur 30 peuvent être réalisés avec tout autre matériau reconnu comme ayant de bonnes caractéristiques de conduction électrique, ce qui est le cas de nombreux matériaux métalliques ou leurs alliages tels que le fer ou l'aluminium, que ces matériaux métalliques soient utilisés purs ou sous la forme d'alliages, ou encore sous la forme de brins d'un premier matériau plaqués par un second matériau, sous réserve de leurs compatibilités électrochimiques et rhéologiques avec les autres matériaux mis en oeuvre dans la pièce en matériau composite.

Dans une troisième étape 300, lorsque le sur-piquage conducteur 30 de la préforme sèche a été réalisé, ladite préforme sèche 20 est imprégnée d'une résine à l'état liquide suivant une technique conventionnelle, comme la technique d'injection de résine du procédé connu sous l'acronyme RTM, technique dans laquelle la préforme sèche 20 est placée dans un moule pendant l'injection de la résine et maintenue jusqu'au durcissement de la résine.

A l'issue de cette troisième étape 300, les fils conducteurs du sur-piquage conducteur 30 se trouvent à la surface de la pièce 10 sur les faces supérieure 11 et inférieure 12, comme ils se trouvaient à la surface de la préforme 20 à l'issue de la seconde étape 200 du procédé, et forment sur les dites surfaces un réseau de fils conducteur suivant les motifs réalisés par les lignes de couture du sur-piquage conducteur réalisé sur la préforme 20, réseau de fils dont la continuité électrique est assurée par les contacts directes entre les fils supérieurs et inférieurs d'une part et entre les différentes lignes de sur-piquage conducteur d'autre part comme il sera compris par la suite.

La pièce 10 en matériau composite obtenue présente alors un comportement électrique de ses surfaces et entre ses surfaces dont les caractéristiques sont déterminées par celles du sur-piquage conducteur 30 réalisé sur la préforme sèche 20.

Suivant la manière dont le procédé est mis en oeuvre, les pièces obtenues et leurs caractéristiques sont adaptées.

Lors de la seconde étape 200, le sur-piquage conducteur 30 est réalisé sur la préforme sèche 20 dans toutes les zones correspondant à des surfaces ou des volumes de la pièce 10 devant être rendus conducteur, ces surfaces ou volumes étant déterminés lors de la conception de la pièce 10.

Dans le cas du présent sur-piquage conducteur, la densité du sur-piquage conducteur 30 réalisé n'a pas pour but premier d'assurer le maintien des plis 21 de la préforme sèche 20 comme dans le cas du sur-piquage isolant, même si ce sur-piquage conducteur est en mesure d'assurer ce maintien et donc d'éviter ou de limiter le besoin d'un sur-piquage isolant, mais de générer, à la surface et dans l'épaisseur de la préforme 20 à ce stade du procédé, et de la pièce 10 à réaliser à un stade ultérieur, un motif conducteur ayant des caractéristiques voulues de conduction électrique.

Les caractéristiques de conduction sont en effet déterminées par :
- les caractéristiques des fils supérieurs 31 et inférieurs 32 du sur-piquage conducteur, en particulier leurs sections et les matériaux utilisés pour les dits fils de sur-piquage conducteur,
- les caractéristiques du sur-piquage conducteur 30 lui-même qui peut être réalisé :
   - avec des points plus ou moins longs caractérisés par une distance **P** entre deux piqûres 33 successives sur une ligne de couture,
   - avec des lignes de couture 34 parallèles ou non, réalisées suivant une distance locale de séparation **D** entre les lignes de couture plus ou moins serré,
   - avec des lignes de couture sécantes réalisées dans des directions différentes, par exemple dans une première orientation principale et dans une seconde orientation à 90 degrés de la première orientation ou encore à plus ou moins 60 degrés de la première orientation, et se croisant alors pour former à la surface de la préforme un réseau plus ou moins dense de fils de sur-piquage conducteur avec des mailles obtenues pour ledit réseau plus ou moins serrées.

En réalisant des lignes de couture sécantes, les fils du sur-piquage conducteur se chevauchent à la surface de la préforme et les fils conducteurs sont alors en continuité électrique.

En effet, même si dans certain cas le contact physique n'est pas totalement assuré à chaque intersection de fils, le nombre de points de contact dans un réseau comportant de nombreuses lignes sécantes garanti en pratique que tous les fils conducteurs sont reliés entre eux.

On comprend ainsi que l'homme du métier par le choix de ces différents paramètres est en mesure de réaliser des caractéristiques de conduction voulues à la surface, et suivant l'épaisseur entre les faces, d'une pièce 10 en matériau composite et que ces conditions peuvent être variables en différents points d'une même pièce et également suivant des directions préférentielles données en un point de la surface de la pièce.

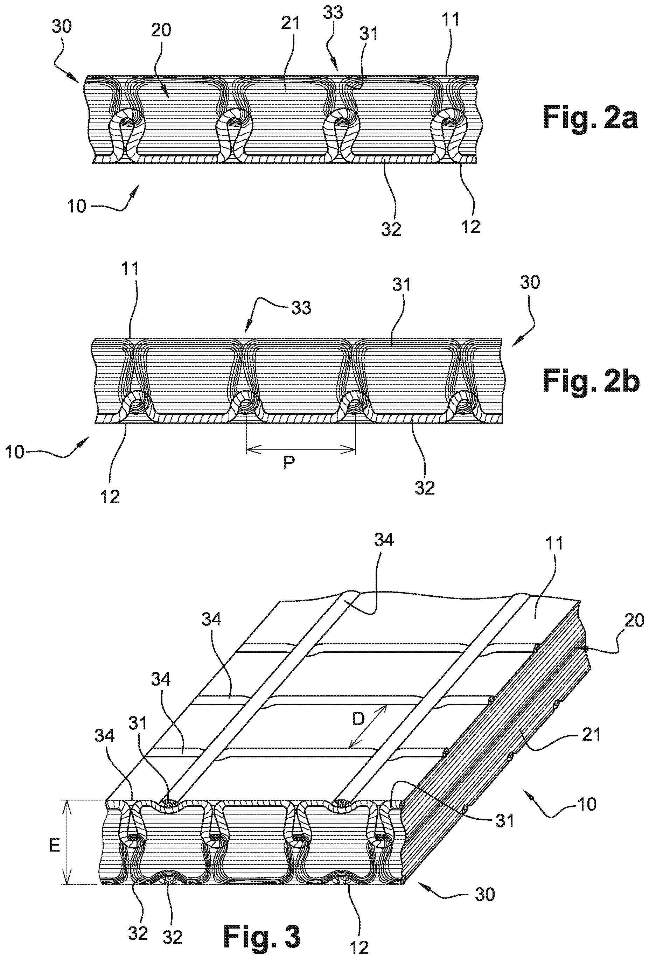

Comme l'illustrent les figures 2a et 2b, qui représentent des sections de pièces obtenues par le procédé, chaque fil supérieur 31 ou inférieure 32 d'une ligne de couture du sur-piquage conducteur 30 forme une ligne conductrice à la surface de la face correspondante, respectivement supérieure 11 ou inférieure 12, et traverse tout ou partie de la préforme 20 et donc de la pièce 10 au niveau des piqûres 33.

Dans le cas illustré sur la figure 2a, le fil supérieur 31 et le fil inférieur 32 se croisent au niveau de chaque piqûre sensiblement à mi-épaisseur de la préforme 20 ou de la pièce 10, ou pour le moins dans une partie médiane de l'épaisseur de telle sorte que, au niveau d'une piqûre, le fil supérieur 31 n'atteint pas la face inférieure 12 de la pièce et que le fil inférieur 32 n'atteint pas la face supérieure 11 de la pièce.

Dans le cas illustré sur la figure 2b, un des fils du sur-piquage conducteur, le fil supérieur 31 dans l'exemple représenté, traverse la pièce dans toute son épaisseur sensiblement jusqu'à la face inférieure 12 opposée alors que l'autre fil, ici le fil inférieur 32, est maintenu près de la face inférieure 12 et éloigné de la face supérieure 11.

Obtenir de telles caractéristiques du sur-piquage conducteur, en agissant en particulier sur la tension des fils lors des opérations de piquage, permet de réaliser des caractéristiques de conduction de surface de la pièce 10 adaptées à des besoins spécifiques, en particulier lorsque que la conduction ne doit pas présenter les mêmes caractéristiques sur les deux faces de la pièces 10.

Ainsi, en choisissant un fil supérieur 31 conducteur ou isolant et un fil inférieur 32 conducteur ou isolant, le procédé permet de réaliser sur la préforme 20 un réseau conducteur de sorte que la pièce 10 est rendue conductrice :
- sur ses deux faces, les réseaux conducteurs des deux faces étant reliées sur le plan électrique, le fil supérieur 31 et le fil inférieur 32 étant choisi conducteurs,
- sur une seule face sans traversées conductrices en utilisant un fil conducteur ne traversant pas totalement l'épaisseur de la pièce 10 au niveau des piqûres 33, le fil supérieur 31 ou le fil inférieur 32 dans l'exemple de la figure 2a ou le fil inférieur 32 dans l'exemple de la figure 2b, et en utilisant un fil non conducteur pour l'autre fil,
- sur une face avec des traversées conductrices en utilisant un fil conducteur au niveau de piqûres traversantes 33, comme dans le cas du fil supérieur 31 dans l'exemple de la figure 2b, l'autre fil étant non conducteur.

Les sur-piquages conducteurs qui viennent d'être décrits dont les caractéristiques peuvent être variables en fonction de la pièce à rendre conductrice ou en fonction d'emplacements à la surface de la pièce 10 peuvent être réalisés par toute technique connue de sur-piquage.

Avantageusement les sur-piquages conducteurs seront réalisés au moyen de machines à sur-piquer à commande numérique et les opérations de sur-piquage conducteur seront réalisées pour optimiser les caractéristiques de conduction dans chaque zone de la surface de la pièce 10.

Une telle optimisation permet en particulier en utilisant des fils électriquement conducteurs pour métalliser une pièce en matériau composite d'éviter un alourdissement résultant de la mise en oeuvre des techniques conventionnelles de métallisation par grillage de bronze dans lesquelles une telle optimisation est impossible ou pour le moins serait très complexe à réaliser par des applications de grillages ayant des caractéristiques différentes en fonction de la zone à la surface de la pièce.

L'intérêt du procédé de l'invention et la variété des pièces à conduction améliorée pouvant être obtenues seront mieux compris en considérant à titre d'illustrations non limitatives les exemple suivants.

Dans une application du procédé à la métallisation d'une pièce, une pièce 10 en matériau composite réalisée suivant le procédé dit RTM est réalisée à partir d'une préforme en fibre sèche dont les plis ont été surpiqués avec des fils supérieurs et inférieurs électriquement conducteurs 31, 32 suivant des lignes de couture 34 sensiblement parallèles à une première direction principale sur la surface de la pièce et suivant une seconde direction sensiblement perpendiculaire à la direction principale comme schématisé sur la figure 3.

La distance D séparant deux lignes de couture parallèles est par exemple de 5 mm pour les deux directions des lignes de couture, formant ainsi sur les faces supérieure et inférieure de la préforme un réseau de mailles carrées de 5 mm de côté.

Dans le cas de la pièce représentée sur la figure 3, les mailles représentées sont rectangulaires. Les formes carrées et rectangulaires des mailles ne constituent que des exemples simples, les mailles pouvant également être en losange avec deux lignes de coutures non orthogonales et pouvant présenter de nombreuses autres formes polygonales régulières ou non lorsque plus de deux directions de couture sont utilisées.

Pour obtenir une pièce métallisée sur ses deux faces, mais comportant une métallisation ayant des caractéristiques différentes sur la face supérieure 11 et sur la face inférieure 12, le fil supérieur 31 est choisi d'une section conductrice différente de celle du fil inférieur 32.

Par exemple le fil supérieur 31 est réalisé par 20 brins torsadés de 50 micromètres de diamètre alors que le fil inférieur 32 n'en comporte que 10.

L'utilisation de fils de cuivre avec ces valeurs de paramètres permet de réaliser une pièce bénéficiant d'une métallisation d'environ 140g/m2 sur la face supérieur 11 et de 70g/m2 sur la face inférieure 12, les deux métallisations étant en continuité électrique par les piqûres.

En pratique les fils auront sans difficulté particulière de mise en oeuvre de 1 à 50 brins pouvant avoir de 0,05 à 0,20 mm de diamètre.

Une telle pièce en matériau composite dispose ainsi d'une métallisation suffisante pour assurer une protection contre les effets de la foudre en cas d'impact de foudre sur la face supérieure tout en permettant d'assurer la continuité électrique de ligne de retour de courant y compris depuis la face inférieure.

Les densités de métallisation sont bien évidemment adaptables en fonction des exigences de la pièce en choisissant la section des fils et la distance entre les lignes de couture.

Dans une autre application, plus générale, du procédé, la quantité de matériau conducteur apporté par les fils du sur-piquage conducteur par unité de surface sur les faces de la pièce est modulée en fonction de zones sur la pièce en matériau composite suivant les caractéristiques recherchées localement en agissant sur les distances **D** entre les lignes de couture du sur-piquage conducteur et ou en modifiant les sections des fils conducteurs de sur-piquage conducteur utilisés.

Ainsi, dans le cas d'une application du procédé à la métallisation d'une pièce, certaines zones nécessitant une métallisation relativement dense, par exemple en raison d'un fort risque d'impact de foudre, comportent des lignes de couture du sur-piquage conducteur relativement rapprochées et ou des fils conducteurs de sections supérieures comparativement à des zones ayant un faible risque d'impact, des zones sans risque pouvant même ne comporter aucun sur-piquage conducteur au profit si besoin d'un sur-piquage isolant a priori moins lourd.

Une autre raison pour créer des zones présentant une métallisation de densité surfacique augmentée au moins localement correspond au besoin de former à la surface de la pièce en matériau composite des cheminements préférentiels pour les courants électriques.

Il est alors dans ce cas possible de créer ces cheminements ou lignes de surface en augmentant la densité du sur-piquage électriquement conducteur dans les zones de cheminements préférentiels. Avantageusement les sections des fils utilisés pour le sur-piquage électriquement conducteur seront choisies en fonctions des courants attendus et de conductivités électriques recherchées pour ces lignes, ainsi que la distance **D** séparant les lignes de couture du sur-piquage électriquement conducteur voisines, au moins pour les directions des lignes de couture orientées pour suivre les cheminements choisis.

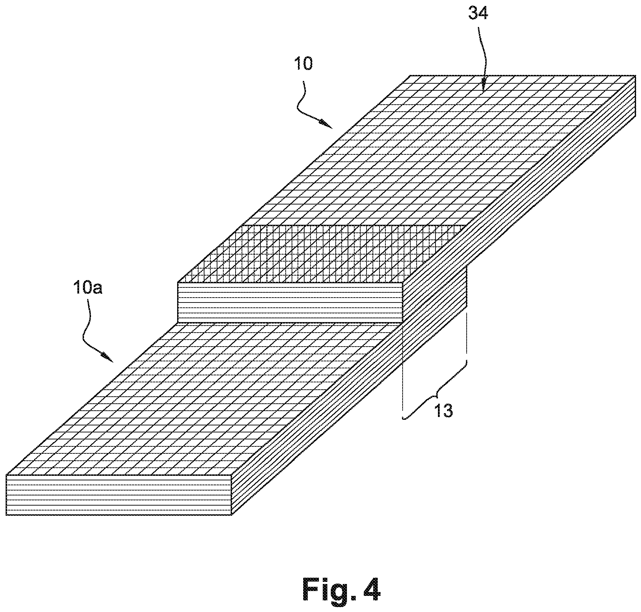

Dans une application du procédé illustrée schématiquement sur la figure 4, il est également réalisé sur des zones de contact 13 d'une pièce 10, par lesquelles zones de contact la pièce doit être assemblée à d'autres pièces conductrices 10a, une densité des sur-piquages conducteurs augmentée au moins sur la face de la pièce devant être en contact avec la pièce assemblée, afin d'assurer une continuité électrique améliorée entre les pièces assemblées.

Dans l'exemple de la figure 4, la pièce 10 est métallisée sur la face supérieure 11 mais se trouve assemblée avec la pièce 10a, métallique ou composite métallisée, au niveau d'une zone de contact 13 de la face inférieure 12 en bordure de la pièce dans cet exemple qui peut ne pas être métallisée ou être insuffisamment métallisée pour garantir la continuité électrique recherchée entre la pièce 10a et la face supérieure 11 de la pièce 10.

Dans les zones 13 de contact, pour obtenir la continuité électrique recherchée, le fil de sur-piquage inférieur 32 est électriquement conducteur d'une part avec une section de fil adaptée et des distances de séparation entre les ligne de couture également adaptée, a priori des sections augmentées et distances diminuées, et d'autre part la distance **P** séparant les piqûres successives est avantageusement diminuée de sorte à augmenter le nombre de piqûres dans la zone de contact et donc de liaisons entre les deux faces de la pièce en matériau composite et d'améliorer ainsi la continuité électrique entre les deux pièces assemblées par une augmentation résultante de la section effective de conducteur électrique traversante.

En diminuant la distance **D** entre les lignes de couture 34 dans ces zones, on augmente également de manière statistique le nombre de points de contacts électriques entre les deux pièces 10 et 10a et donc la garantie d'une continuité électrique satisfaisante.

Dans une autre forme de réalisation une pièce est métallisée sur une seule de ses faces sans toutefois que des éléments conducteurs ne traversent l'épaisseur de la pièce. Ce résultat, obtenu en utilisant un fil électriquement conducteur pour la face devant être métallisée et un fil isolant électriquement pour la face de la pièce ne devant pas être métallisée et en réalisant un sur-piquage conducteur dans lequel le fil conducteur n'atteint pas la face ne devant pas être métallisée, permet de métalliser des pièces pour lesquelles la traversée de charges électriques et un étincelage sur la face non métallisée doit être évités, par exemple en raison de la présence de vapeurs inflammables.

Une autre méthode mise en oeuvre du procédé pour obtenir un résultat similaire pour la pièce réalisée consiste à réaliser un sur-piquage conducteur avec des fils électriquement conducteurs sur une partie des plis de la préforme qui dans la pièce à réaliser vont se trouver du côté devant être métallisé afin de créer une première préforme partielle.

Ensuite les autres plis de fibres sèches prévus de la préforme sont placés sur la face de la préforme partielle du côté de la pièce ne devant pas être métallisée et l'ensemble des plis est surpiqué si besoin avec des fils isolants conventionnels qui assurent le compactage et le maintien de l'ensemble des plis de la préforme.

Ainsi, lorsque la pièce est terminée après injection de résine, une face de la pièce est métallisée alors que l'autre face ne l'est pas du fait que le fil de sur-piquage conducteur ne traverse pas la pièce d'une face à l'autre et seulement une partie des plis du côté d'une face de la pièce.

Dans une variante, la pièce est métallisée sur chacune de ses deux faces comme il vient d'être décrit pour une face, une partie médiane des plis n'étant pas surpiqués ou surpiqués avec des fils non conducteur électrique de sorte que les métallisations de chacune des faces de la pièce sont isolées l'une de l'autre.

Dans le cas de l'utilisation de la structure composite pour réaliser des retours de courants des équipements électriques l'invention s'avère particulièrement avantageuse.

Les pièces métallisées de l'invention sont conductrices électriquement et assurent la continuité électrique entre les différentes pièces assemblées ce qui permet dans une structure complexe telle que la cellule d'un avion de réaliser le retour de courant de l'alimentation électrique des équipements par la structure composite assemblée ainsi conductrice et ce d'autant plus aisément que la jonction électrique de l'équipement avec la structure par une tresse de masse d'un équipement peut être réalisée sur n'importe laquelle des deux faces de la pièce, au moins dans des zones où cette possibilité aura été rendue possible par les caractéristiques du sur-piquage conducteur.

La pièce 10 en matériau composite de l'invention est donc une pièce dont une dimension, l'épaisseur, comporte un empilement de plis 21 formés de fibres maintenues dans une résine organique dure, les fibres étant des fibres minérales ou organiques isolantes ou faiblement conductrices (verre, aramide, carbone ...).

En outre dans cette pièce en matériau composite des fils supérieurs 31 et des fils inférieurs 32, l'une au moins de ces deux catégories de fils étant constituée de fils réalisés dans un matériau électriquement conducteur, par rapport aux caractéristiques des fibres et de la matrice du matériau composite, par exemple du cuivre, de l'aluminium ou du fer ou un alliage à base d'un de ces métaux,, détermine sur au moins une face de la pièce un réseau formé par des lignes de couture 34 d'un sur-piquage conducteur d'au moins une partie des plis 21 de la pièce en matériau composite situés du côté d'une face de la pièce conductrice en matériau composite, c'est à dire rendue électriquement conductrice en surface par la présence à la surface de la pièce des fils conducteurs électriquement.

La pièce 10 en matériau composite ainsi formée est par exemple un panneau réalisé en fibres de carbone maintenues dans une matrice organique obtenu par le procédé RTM tel qu'un panneau de fuselage d'aéronef ou un panneau de caisson d'une aile d'avion.

De manière générale une telle pièce correspond à toute pièce en matériau composite dont l'épaisseur est le résultat principalement d'un empilage de plis de fibres.

Dans le domaine des aéronefs cela correspond notamment, outre des panneaux déjà cités, à des cadres ou à des raidisseurs qui bien que de formes complexes sont formés de voiles dont l'épaisseur est le résultat d'un empilage de plis.

De telles pièces comportent par exemple dans le sens de l'épaisseur **E** de dix à cinquante plis 21 de fibres de carbone, de Kevlar® ou de verre suivant la résistance recherchée, le nombre de plis pouvant varier pour une même pièce suivant l'emplacement considéré sur la pièce.

Pour les besoins d'une structure électriquement conductrice, les fils supérieurs 31 et ou inférieures 32 du sur-piquage conducteur sont formés par un fil de cuivre ou d'un autre matériau bon conducteur électrique de section conductrice de préférence comprise entre 0,005 mm2 et 0,50 mm2 dans les cas les plus courants de pièces destinées à des aéronefs.

De préférence les fils électriquement conducteurs sont des fils comportant une pluralité de brins, par exemple de 1 à 50 brins pouvant avoir un diamètre compris entre 0,05 à 0,20 mm, de sorte à disposer de fils suffisamment souples au moment de leurs mises en oeuvre avant qu'ils ne soient maintenus dans la matrice dure.

Le réseau conducteur formé par les lignes de couture comporte une première direction principale, par exemple avec un pas entre les lignes de couture d'environ 5 mm et une distance entre les points de piquage du même ordre de grandeur, et comporte au moins une seconde direction telle que les lignes de couture suivant cette direction intersectent les lignes de couture suivant la direction principale.

Il doit être noté que les sur-piquages conducteurs au moyen de fils métalliques permettent également de modifier le comportement thermique d'une pièce en matériau composite, du fait que les matériaux bons conducteurs de l'électricité sont également, dans le domaine des matériaux courants, de bons conducteurs thermiques.

Suivant que l'amplification d'un effet sur la conduction thermique sera recherché ou qu'au contraire on cherchera à en limiter l'ampleur malgré une métallisation, le nombre de piqûres au m2 et le type du matériau conducteur électriquement utilisé pour les fils de sur-piquage conducteur seront adaptés.

Par exemple les capacités de transfert de chaleur d'une pièce métallisée entre ses deux faces pourront être diminuées en utilisant des fils en acier inoxydable ou en invar, dont les caractéristiques de conduction thermiques sont sensiblement inférieures à celle du cuivre, et en diminuant si besoin le nombre de piqûres par unité de surface.

Une application où une amélioration de la conduction thermique d'une pièce composite, qui pourra être obtenue en utilisant un matériau de métallisation bon conducteur thermique tel que le cuivre ou en superposant à un sur-piquage de métallisation un sur-piquage par un fil de carbone à conduction thermique renforcée, concerne les structures de satellites.

Dans les satellites qui évolue dans le vide les équipements ne peuvent pas être refroidis par convection et en raison des mauvaises propriétés de conduction thermique des matériaux composites mis en oeuvre dans les structures des satellites, les équipements constituant des sources de chaleur sont refroidis le plus souvent par des dispositifs complexes du type caloduc.

L'application du procédé de l'invention à des pièces de structure du satellite est en mesure d'assurer le transfert de la chaleur des équipements vers des dispositifs rayonnant et d'éviter de faire appel à des dispositifs plus complexes ou du moins d'en limiter le nombre.

Bien que le procédé décrit soit particulièrement adapté à une pièce réalisée suivant le procédé RTM, les opérations de sur-piquage conducteur étant aisément réalisés sur la préforme en fibres sèches non enduites de résine, ledit procédé est applicable également avec toutes les préformes sur lesquelles des opérations de sur-piquage peuvent être réalisées, c'est à dire pour lesquelles il est possible de traverser un empilage de plis d'une préforme au moyen d'une aiguille de piquage.

En particulier le sur-piquage conducteur peut être réalisé sur des préformes dont les fibres ont subit des traitements préalables comme des fibres poudrées, c'est à dire comportant à la surface des fibres des grains de petites dimensions par rapport aux fibres, d'une résine thermofusible destinées à donner une stabilité dimensionnelle temporaire à la préforme réalisée.

Le sur-piquage conducteur peut également être réalisé sur des préformes en fibres pré-imprégnées d'une résine thermodurcissable, à un stade du procédé de fabrication d'une pièce en matériau composite dans lequel la matrice maintenant les fibres de la pièce n'est pas encore durcie.

Bien que la description ait été détaillée avec des coutures utilisant des points de navette mettant en oeuvre deux fils, il est également possible de réaliser les coutures en réalisant des points de chaînette qui ne nécessitent qu'un fil unique, bien que les machines produisant ce type de points soient actuellement moins performantes pour réaliser des coutures.

Dans cette solution appliquée à l'invention le fil unique d'une couture du sur-piquage conducteur est bien sûr un fil conducteur et il faut alors comprendre dans la description de l'invention que le fil supérieur sur la face supérieure de la pièce et le fil inférieur sur la face inférieure de la pièce sont un seul et même fil dont la désignation est changée en fonction de la face observée.

On comprendra également que les lignes de couture représentées sensiblement rectilignes sur les figures peuvent être de formes quelconques et en particulier présenter des courbures adaptées aux formes de la pièce.

Par la mise en oeuvre du procédé de l'invention, en optimisant en tout point de la surface de la pièce la densité surfacique du sur-piquage conducteur et de ses différentes caractéristiques, il est ainsi possible d'obtenir des caractéristiques de conduction électrique optimisée en tout point de la pièce et donc de diminuer la masse totale consacrée aux besoins de conduction et vis à vis de la métallisation d'obtenir des pièces allégées par rapport à des pièces comportant une métallisation conventionnelle par un grillage conducteur à la surface de la pièce ainsi que des pièces en matériau composite aptes à assurer la retour de courant des équipements électriques ou électroniques d'un véhicule.

## Revendications

1. Procédé de fabrication d'une pièce (10) en matériau composite à caractéristiques de conduction électrique améliorée, comportant des fibres de résistivité électrique égale ou supérieure à 1,5 10^-6 Ω.m, réparties suivant des plis (21) empilés dans une épaisseur **E** de la pièce (10) et maintenues, dans la pièce fabriquée, dans une matrice en résine organique dure **caractérisé en ce qu'**un sur-piquage conducteur (30) comportant des fils supérieurs (31) et des fils inférieurs (32), un fil supérieur croisant un fil inférieur au niveau d'une piqûre (33), est réalisé sur une préforme (20), constituée de tout ou partie des plis (21) placés les uns par rapport aux autres dans un ordre et suivant des orientations que les dits plis doivent avoir dans la pièce fabriquée, le dit sur-piquage conducteur étant réalisé lors d'une étape (200) du procédé pendant laquelle la préforme n'est pas imprégnée de résine, ou la résine de la matrice n'est pas dure, et en utilisant pour au moins un des fils supérieurs (31) ou inférieurs (32) du sur-piquage conducteur un fil électriquement conducteur réalisé dans un matériau de résistivité électrique inférieure à 10^-7 Ω.m et dans lequel le sur-piquage conducteur (30) est réalisé suivant des lignes de couture (34) sensiblement parallèles suivant une première direction principale et suivant des lignes de couture (34) sensiblement parallèles suivant au moins une seconde direction différente de la direction principale de sorte que les fils électriquement conducteurs du sur-piquage conducteur (30) se croisent et forment sur au moins une face de la préforme un réseau de fils électriquement conducteurs en continuité électrique au niveau de leurs intersections.

2. Procédé suivant la revendication 1 dans lequel au niveau de chaque piqûre (33) du sur-piquage conducteur traversant la préforme (20), le fil supérieur (31) et le fil inférieur (32) sont croisés dans une partie médiane d'une épaisseur de la préforme.

3. Procédé suivant la revendication 1 dans lequel au niveau de chaque piqûre (33) du sur-piquage conducteur traversant la préforme (20), le fil supérieur (31) et le fil inférieur (32) sont croisés au niveau d'une face inférieure de la préforme du côté de laquelle face inférieure se trouve le fil inférieur.

4. Procédé suivant l'une des revendications précédentes dans lequel le sur-piquage conducteur (30) est réalisé en utilisant des fils supérieurs (31) électriquement conducteurs et des fils inférieurs (32) électriquement conducteurs.

5. Procédé suivant l'une des revendications 1 à 3 dans lequel le sur-piquage conducteur (30) est réalisé en utilisant des fils supérieurs (31) électriquement conducteurs et des fils inférieurs (32) électriquement non conducteurs de résistivité supérieure à 10^10 Ω.m ou en utilisant des fils supérieurs (31) électriquement non conducteurs de résistivité supérieure à 10^10 Ω.m et des fils inférieurs (32) électriquement conducteurs.

6. Procédé suivant l'une des revendications précédentes dans lequel les fils supérieurs et ou inférieurs électriquement conducteurs sont constitués d'un assemblage de brins métalliques.

7. Procédé suivant l'une des revendications précédentes dans lequel des distances D entre des lignes de couture (34) voisines sensiblement parallèles sont déterminées pour obtenir une densité surfacique d'une métallisation de la préforme (20) comprise entre 30 et 500g/m2.

8. Procédé suivant l'une des revendications précédentes dans lequel des longueurs P entre des piqûres (33) successives d'une ligne de couture (34) sont déterminées pour obtenir, au moins localement, une section électriquement conductrice des fils de sur-piquage électriquement conducteur traversant la préforme suivant son épaisseur comprise entre 1000 et 50000 mm2 par m2 de surface de la pièce (10).

9. Procédé suivant l'une des revendications précédentes dans lequel le sur-piquage conducteur (30) est réalisé sur une préforme sèche.

10. Procédé suivant l'une des revendications 1 à 8 dans lequel le sur-piquage conducteur (30) est réalisé sur une préforme dont les fibres des plis (21) sont pré-imprégnées d'une résine non durcie.

11. Pièce (10) en matériau composite comportant des fibres de résistivité électrique égale ou supérieure à 1,5 10^-6 Ω.m, maintenues dans une matrice organique dure, dans laquelle lesdites fibres sont agencées en plis (21) superposés suivant une épaisseur **E** de la pièce entre une face supérieure (11) et une face inférieure (12) de la pièce, **caractérisée en ce que** des fils supérieurs (31) du côté de la face supérieure (11) et des fils inférieurs (32) du côté de la face inférieure (12), agencés en lignes de couture (34) suivant au moins deux directions sécantes, traversent tout ou partie des plis (21) au niveau de piqûres (33) et **en ce que** les fils supérieurs (31) et ou les fils inférieurs (32) sont électriquement conducteurs réalisés dans un matériau de résistivité électrique inférieure à 10^-7 Ω.m et déterminent à la surface de la pièce (10) sur au moins une face correspondante, supérieure (11), respectivement inférieure (12), un réseau de fils électriquement conducteurs et en contact au niveau d'intersections entre les fils électriquement conducteurs.

12. Pièce suivant la revendication 11 dans laquelle seuls les fils supérieurs (31) ou seuls les fils inférieurs (32) sont électriquement conducteurs, lesdits fils électriquement conducteurs ne traversant qu'une partie de l'épaisseur E de la pièce (10) au niveau des piqûres (33).

13. Pièce suivant la revendication 11 ou la revendication 12 dans laquelle les fils électriquement conducteurs (31, 32) sont des fils métalliques, en particulier à base de cuivre, d'aluminium ou d'un acier, formés par un brin ou par un assemblage de plusieurs brins.

14. Pièce suivant la revendication 13 dans lequel les fils électriquement conducteurs (31, 32) ont des sections conductrices comprises entre 0.05mm2 et 0.50mm2 et comportent entre 1 et 50 brins.

15. Pièce suivant la revendication 13 ou la revendication 14 dans laquelle des distances **D** entre lignes de couture (34) voisines déterminent sur la face considérée de la pièce (10) une métallisation comprise entre 30 et 500 g/m2.

16. Pièce suivant l'une des revendications 11 à 15 dans laquelle une densité des piqûres (33) du sur-piquage conducteur (30) à la surface de la pièce (10) est compris localement entre 2500 et 250000 piqûres par m2.

17. Pièce suivant l'une des revendications 11 à 16 dans laquelle une densité surfacique de fils électriquement conducteurs et ou une densité de piqûres (33) du sur-piquage conducteur (30) sont variables suivant des emplacements à la surface de la pièce (10).

18. Pièce suivant la revendication 17 dans laquelle la densité surfacique de fils électriquement conducteur et ou la densité de piqûres (33) du sur-piquage conducteur (30) sont augmentées dans des zones (13) correspondant à des surfaces d'assemblage entre la pièce (10) et une ou plusieurs autres pièces (10a) électriquement conductrices.

19. Pièce conforme à l'une des revendications 11 à 18 destinée à une structure d'aéronef et comportant sur au moins une de ses faces une métallisation réalisée au moyen de fils de sur-piquage électriquement conducteurs destinée à assurer un retour de courant d'équipements électriques ou électroniques de l'aéronef.

20. Pièce conforme à l'une des revendications 11 à 19 destinée à une structure d'aéronef et comportant sur au moins une de ses faces une métallisation réalisée au moyen de fils de sur-piquage électriquement conducteurs destinée à protéger la pièce en matériau composite contre les effets d'un impact de foudre.

## Patentansprüche

1. Verfahren zur Herstellung eines Stücks (10) aus Verbundmaterial mit Eigenschaften von verbesserter elektrischer Leitung, das Fasern mit einem spezifischen elektrischen Widerstand, der gleich oder höher als 1,5 10⁻⁶ Ω · m ist, enthält, die gemäß Lagen (21) verteilt sind, die in einer Dicke E des Stücks (10) gestapelt sind und im hergestellten Stück in einer Grundmasse aus hartem organischem Harz gehalten werden, **dadurch gekennzeichnet, dass** eine leitfähige Steppnaht (30) mit oberen Fäden (31) und unteren Fäden (32), wobei ein oberer Faden einen unteren Faden auf der Höhe einer Heftung (33) kreuzt, an einer Vorform (20) hergestellt wird, die ganz oder teilweise aus Lagen (21) gebildet ist, die in Bezug aufeinander in einer Ordnung und gemäß Orientierungen angeordnet sind, die die Lagen in dem hergestellten Stück aufweisen müssen, wobei die leitfähige Steppnaht in einem Schritt (200) des Verfahrens, während dessen die Vorform nicht mit Harz imprägniert ist oder das Harz der Grundmasse nicht hart ist, und unter Verwendung eines elektrisch leitfähigen Fadens für mindestens einen der oberen (31) oder unteren (32) Fäden der leitfähigen Steppnaht hergestellt wird, der aus einem Material mit einem spezifischen elektrischen Widerstand hergestellt ist, der geringer als 10⁻⁷ Ω · m ist, und in dem die leitfähige Steppnaht (30) gemäß Nahtlinien (34), die gemäß einer ersten Hauptrichtung im Wesentlichen parallel sind, und gemäß Nahtlinien (34), die gemäß mindestens einer zweiten Richtung, die von der Hauptrichtung verschieden ist, im Wesentlichen parallel sind, hergestellt wird, so dass sich die elektrisch leitfähigen Fäden der leitfähigen Steppnaht (30) kreuzen und auf mindestens einer Seite der Vorform ein Netz aus elektrisch leitfähigen Fäden in elektrischer Kontinuität auf der Höhe ihrer Schnittpunkte bilden.

2. Verfahren nach Anspruch 1, wobei auf der Höhe jeder Heftung (33) der leitfähigen Steppnaht, die die Vorform (20) durchquert, der obere Faden (31) und der untere Faden (32) in einem Mittelabschnitt einer Dicke der Vorform gekreuzt sind.

3. Verfahren nach Anspruch 1, wobei auf der Höhe jeder Heftung (33) der leitfähigen Steppnaht, die die Vorform (20) durchquert, der obere Faden (31) und der untere Faden (32) auf der Höhe einer Unterseite der Vorform gekreuzt sind, auf welcher Seite der Unterseite sich der untere Faden befindet.

4. Verfahren nach einem der vorangehenden Ansprüche, wobei die leitfähige Steppnaht (30) unter Verwendung von elektrisch leitfähigen oberen Fäden (31) und elektrisch leitfähigen unteren Fäden (32) hergestellt wird.

5. Verfahren nach einem der Ansprüche 1 bis 3, wobei die leitfähige Steppnaht (30) unter Verwendung von elektrisch leitfähigen oberen Fäden (31) und elektrisch nicht leitfähigen unteren Fäden (32) mit einem spezifischen elektrischen Widerstand, der höher ist als 10¹⁰ Ω · m, oder unter Verwendung von elektrisch nicht leitfähigen oberen Fäden (31) mit einem spezifischen elektrischen Widerstand, der höher ist als 10¹⁰ Ω · m, und elektrisch leitfähigen unteren Fäden (32) hergestellt wird.

6. Verfahren nach einem der vorangehenden Ansprüche, wobei die elektrisch leitfähigen oberen und/oder unteren Fäden aus einem Verbund von metallischen Strängen gebildet sind.

7. Verfahren nach einem der vorangehenden Ansprüche, wobei Abstände D zwischen benachbarten Nahtlinien (34), die im Wesentlichen parallel sind, bestimmt werden, um eine Oberflächendichte einer Metallisierung der Vorform (20) zwischen 30 und 500 g/m² zu erhalten.

8. Verfahren nach einem der vorangehenden Ansprüche, wobei Längen P zwischen aufeinander folgenden Heftungen (33) einer Nahtlinie (34) bestimmt werden, um zumindest lokal einen elektrisch leitfähigen Querschnitt der Fäden der elektrisch leitfähigen Steppnaht, die die Vorform gemäß ihrer Dicke durchquert, zwischen 1000 und 50000 mm² pro m² der Oberfläche des Stücks (10) zu erhalten.

9. Verfahren nach einem der vorangehenden Ansprüche, wobei die leitfähige Steppnaht (30) an einer trockenen Vorform hergestellt wird.

10. Verfahren nach einem der Ansprüche 1 bis 8, wobei die leitfähige Steppnaht (30) an einer Vorform hergestellt wird, deren Fasern der Lagen (21) mit einem nicht gehärteten Harz vorimprägniert werden.

11. Stück (10) aus Verbundmaterial mit Fasern mit einem spezifischen elektrischen Widerstand, der gleich oder höher als 1,5 10⁻⁶ Ω · m ist, die in einer harten organischen Grundmasse gehalten werden, in der die Fasern in Lagen (21) angeordnet sind, die in einer Dicke E des Stücks zwischen einer Oberseite (11) und einer Unterseite (12) des Stücks aufeinander gelegt sind, **dadurch gekennzeichnet, dass** obere Fäden (31) auf der Seite der Oberseite (11) und untere Fäden (32) auf der Seite der Unterseite (12), die in Nahtlinien (34) gemäß mindestens zwei Schnittrichtungen angeordnet sind, ganz oder teilweise die Lagen (21) auf der Höhe von Heftungen (33) durchqueren, und dass die oberen Fäden (31) und/oder die unteren Fäden (32) elektrisch leitfähig aus einem Material mit einem spezifischen elektrischen Widerstand, der geringer ist als 10⁻⁷ Ω · m, hergestellt sind und an der Oberfläche des Stücks (10) auf mindestens einer entsprechenden oberen (11) bzw. unteren (12) Seite ein Netz von elektrisch leitfähigen Fäden in Kontakt auf der Höhe von Schnittpunkten zwischen den elektrisch leitfähigen Fäden bestimmen.

12. Stück nach Anspruch 11, in dem nur die oberen Fäden (31) oder nur die unteren Fäden (32) elektrisch leitfähig sind, wobei die elektrisch leitfähigen Fäden nur einen Teil der Dicke E des Stücks (10) auf der Höhe der Heftungen (33) durchqueren.

13. Stück nach Anspruch 11 oder Anspruch 12, in dem die elektrisch leitfähigen Fäden (31, 32) Metallfäden, insbesondere auf der Basis von Kupfer, Aluminium oder eines Stahls, sind, die durch einen Strang oder durch einen Verbund von mehreren Strängen gebildet sind.

14. Stück nach Anspruch 13, in dem die elektrisch leitfähigen Fäden (31, 32) leitfähige Querschnitte zwischen 0,05 mm² und 0,50 mm² und mit zwischen 1 und 50 Strängen aufweisen.

15. Stück nach Anspruch 13 oder Anspruch 14, in dem Abstände D zwischen benachbarten Nahtlinien (34) auf der betrachteten Seite des Stücks (10) eine Metallisierung zwischen 30 und 500 g/m² bestimmen.

16. Stück nach einem der Ansprüche 11 bis 15, in dem eine Dichte der Heftungen (33) der leitfähigen Steppnaht (30) an der Oberfläche des Stücks (10) lokal zwischen 2500 und 250000 Heftungen pro m² liegt.

17. Stück nach einem der Ansprüche 11 bis 16, in dem eine Oberflächendichte von elektrisch leitfähigen Fäden und/oder eine Dichte von Heftungen (33) der leitfähigen Steppnaht (30) gemäß Orten an der Oberfläche des Stücks (10) variabel sind.

18. Stück nach Anspruch 17, in dem die Oberflächendichte von elektrisch leitfähigen Fäden und/oder die Dichte von Heftungen (33) der leitfähigen Steppnaht (30) in Zonen (13) erhöht sind, die Zusammenfügungsoberflächen zwischen dem Stück (10) und einem oder mehreren anderen elektrisch leitfähigen Stücken (10a) entsprechen.

19. Stück nach einem der Ansprüche 11 bis 18, das für eine Flugzeugstruktur bestimmt ist und auf mindestens einer seiner Seiten eine Metallisierung umfasst, die mittels elektrisch leitfähiger Fäden einer Steppnaht hergestellt ist, die eine Stromrückführung von elektrischen oder elektronischen Geräten des Flugzeugs sicherstellen soll.

20. Stück nach einem der Ansprüche 11 bis 19, das für eine Flugzeugstruktur bestimmt ist und auf mindestens einer seiner Seiten eine Metallisierung umfasst, die mittels elektrisch leitfähiger Fäden einer Steppnaht hergestellt ist, die das Stück aus Verbundmaterial vor den Effekten eines Blitzschlags schützen soll.

## Claims

1. Method for manufacturing a part (10) made from composite material with improved electrical conduction characteristics, including fibres with an electrical resistivity equal to or greater than 1.5 10^-6 Ω·m, distributed in plies (21) that are stacked in a thickness **E** of the part (10) and held, in the manufactured part, in a matrix made from hard organic resin, **characterized in that** a conductive topstitching (30) including upper threads (31) and lower threads (32), an upper thread crossing a lower thread at the level of a stitch (33), is produced on a preform (20), formed of all or some of the plies (21) that are positioned with respect to one another in an order and in orientations that said plies must have in the manufactured part, said conductive topstitching being produced during a step (200) of the method during which the preform is not impregnated with resin, or the resin of the matrix is not hard, and by using, for at least one of the upper (31) or lower (32) threads of the conductive topstitching, an electrically conductive thread made of a material with an electrical resistivity of less than 10^-7 Ω·m and wherein the conductive topstitching (30) is produced along seam lines (34) that are substantially parallel in a first main direction and along seam lines (34) that are substantially parallel in at least one second direction that differs from the main direction such that the electrically conductive threads of the conductive topstitching (30) cross one another and form, on at least one face of the preform, a web of electrically conductive threads in electrical continuity at their intersections.

2. Method according to Claim 1, wherein, at the level of each stitch (33) of the conductive topstitching passing through the preform (20), the upper thread (31) and the lower thread (32) are crossed in a middle portion of a thickness of the preform.

3. Method according to Claim 1, wherein, at the level of each stitch (33) of the conductive topstitching passing through the preform (20), the upper thread (31) and the lower thread (32) are crossed at the level of a lower face of the preform, on the side of which lower face the lower thread is situated.

4. Method according to one of the preceding claims, wherein the conductive topstitching (30) is produced by using electrically conductive upper threads (31) and electrically conductive lower threads (32).

5. Method according to one of Claims 1 to 3, wherein the conductive topstitching (30) is produced by using electrically conductive upper threads (31) and electrically non-conductive lower threads (32) with a resistivity of greater than 10^10 Ω·m or by using electrically non-conductive upper threads (31) with a resistivity of greater than 10^10 Ω·m and electrically conductive lower threads (32).

6. Method according to one of the preceding claims, wherein the upper and/or lower electrically conductive threads are formed of an assembly of metal strands.

7. Method according to one of the preceding claims, wherein distances **D** between adjacent seam lines (34) that are substantially parallel are set so as to obtain an areal density of a metallization of the preform (20) of between 30 and 500 g/m2.

8. Method according to one of the preceding claims, wherein lengths **P** between successive stitches (33) of a seam line (34) are set so as to obtain, at least locally, an electrically conductive cross sectional area of the electrically conductive topstitching threads passing through the preform in its thickness of between 1000 and 50 000 mm2 per m2 of surface area of the part (10).

9. Method according to one of the preceding claims, wherein the conductive topstitching (30) is produced on a dry preform.

10. Method according to one of Claims 1 to 8, wherein the conductive topstitching (30) is produced on a preform in which the fibres of the plies (21) are preimpregnated with an uncured resin.

11. Part (10) made from composite material including fibres with an electrical resistivity equal to or greater than 1.5 10^-6 Ω·m, held in a hard organic matrix, wherein said fibres are arranged in plies (21) that are superimposed in a thickness **E** of the part between an upper face (11) and a lower face (12) of the part, **characterized in that** upper threads (31) on the side of the upper face (11) and lower threads (32) on the side of the lower face (12), which threads are arranged in seam lines (34) in at least two secant directions, pass through all or some of the plies (21) at the level of stitches (33), and **in that** the upper threads (31) and/or the lower threads (32) are electrically conductive and made of a material with an electrical resistivity of less than 10^-7 Ω·m and define, at the surface of the part (10) on at least one corresponding upper (11), respectively lower (12), face, a web of electrically conductive threads that are in contact at intersections between the electrically conductive threads.

12. Part according to Claim 11, wherein only the upper threads (31) or only the lower threads (32) are electrically conductive, said electrically conductive threads passing through only a portion of the thickness E of the part (10) at the level of the stitches (33).

13. Part according to Claim 11 or Claim 12, wherein the electrically conductive threads (31, 32) are metal threads, in particular based on copper, on aluminium or on a steel, and formed by a strand or by an assembly of a plurality of strands.

14. Part according to Claim 13, wherein the electrically conductive threads (31, 32) have conductive cross sections of between 0.05 mm2 and 0.50 mm2 and include between 1 and 50 strands.

15. Part according to Claim 13 or Claim 14, wherein distances **D** between adjacent seam lines (34) define, on that face of the part (10) that is under consideration, a metallization of between 30 and 500 g/m2.

16. Part according to one of Claims 11 to 15, wherein a density of the stitches (33) of the conductive topstitching (30) at the surface of the part (10) is locally between 2500 and 250 000 stitches per m2.

17. Part according to one of Claims 11 to 16, wherein an areal density of electrically conductive threads and/or a density of stitches (33) of the conductive topstitching (30) are/is variable depending on locations at the surface of the part (10).

18. Part according to Claim 17, wherein the areal density of electrically conductive threads and/or the density of stitches (33) of the conductive topstitching (30) are/is increased in zones (13) corresponding to surfaces where the part (10) is assembled with one or more other electrically conductive parts (10a).

19. Part according to one of Claims 11 to 18, intended for an aircraft structure and including, on at least one of its faces, a metallization produced by way of electrically conductive topstitching threads and intended to ensure a return of current from electrical or electronic devices of the aircraft.

20. Part according to one of Claims 11 to 19, intended for an aircraft structure and including, on at least one of its faces, a metallization produced by way of electrically conductive topstitching threads and intended to protect the part made from composite material against the effects of a lightning strike.
